# EUROPÄISCHE PATENTANMELDUNG

(11) **EP 4 636 663 A1**
(43) Veröffentlichungstag der Anmeldung: **22.10.2025**
(21) Anmeldenummer: 24170689.4
(22) Anmeldetag: 17.04.2024
(51) Int. Cl.: G06N 20/10, G06F 16/215, G06F 16/23

(54) **VERFAHREN ZUR VOLLSTÄNDIGKEITSSCHÄTZUNG VON DATEN**

(71) Anmelder: Robert Bosch GmbH, 70442 Stuttgart (DE)
(72) Erfinder: Sohns, Joachim, 70825 Korntal-Muenchingen (DE); Brade, Tino, 06774 Muldestausee (DE)

(57) **Zusammenfassung**

Ein allgemeiner Aspekt der vorliegenden Offenbarung betrifft ein Verfahren zur Vollständigkeitsschätzung von Daten. Das Verfahren umfasst Empfangen eines Datensatzes als Ergebnis einer Mehrzahl von Beobachtungen aus einer Datenerfassung, Einteilen der Daten des Datensatzes in ein oder mehrere Szenarien, Eingruppieren 130 des einen oder der mehreren Szenarien in eine Mehrzahl von Szenarioklassen, wobei die Mehrzahl von Szenarioklassen die bereits beobachteten Szenarioklassen einer Gesamtmenge von Szenarioklassen umfasst, Schätzen, ob die bisher beobachteten Szenarioklassen ein Kriterium für die Szenarioklassenvollständigkeit im Hinblick auf die Gesamtmenge von Szenarioklassen erfüllen, Bestimmen, auf der Basis einer oder mehrerer Auftrittswahrscheinlichkeitsverteilungen, ob das eine oder die mehreren Szenarien, die einer Szenarioklasse zugeordnet sind, ein Kriterium für die Szenariovollständigkeit der entsprechenden Szenarioklasse erfüllen, und Ausgeben eines Befehls zum Beenden der Datenerfassung, wenn das Kriterium für die Szenarioklassenvollständigkeit und das Kriterium für die Szenariovollständigkeit erfüllt sind.

## Beschreibung

### Stand der Technik

Hochautomatisierte oder autonome Systeme stehen bspw. in der Robotik und der Automobilbranche zunehmend im Fokus. Eine besondere Herausforderung bei der Entwicklung dieser Systeme besteht darin, dass beispielsweise ein autonomes System in unterschiedlichen Situationen sicher und zuverlässig funktionieren muss. Man schätzt, dass bei modernen autonomen Pilotensystemen ab dem Automatisierungslevel 3 ein Ressourcenaufwand von 80% in der Validierung und nur 20% in der Entwicklung liegt, da die Absicherung der Systeme sehr komplex sein kann. Um die Anforderungen an das System und seine Komponenten ausreichend zu spezifizieren und diese später testen zu können, ist es erforderlich, möglichst viele repräsentative Szenarien (Situationen), in denen sich das autonome System verhalten können muss, in einen Datensatz aufzunehmen. Der Datensatz kann dabei verwendet werden, das autonome System zu verifizieren und zu validieren. In Beispielen kann der Datensatz auch dazu dienen, Maschinelles-Lernen-Modelle zu trainieren und/oder zu validieren.

Mit steigendem Automatisierungslevel (SAE-Level) kann die Menge der zu betrachtenden Szenarien sehr umfangreich werden und in Folge des Open-Context können sich diese Szenarien zudem über die Zeit ändern. Um sicher zu stellen, dass alle relevanten Szenarien berücksichtigt werden, werden unter anderem Daten eingefahren und automatisiert ausgewertet.

Im Kontext von Datenerfassungssystemen (zum Beispiel Dauerlaufdaten) ist die Frage zu beantworten, wann die erfassten Daten als vollständig gewertet werden und die Datenerfassung beendet werden kann. Üblicherweise wird im Stand der Technik die Vollständigkeit gegen eine Referenz gemessen, die aus einem bereits vorliegenden Datensatz oder Ersatzmodell abgeleitet wird. Die bestehenden Methoden bieten jedoch kein Kriterium für das benötigte Maß an Ähnlichkeit. Weiter ergeben sich Probleme, diese Methoden anzuwenden, wenn kein Referenzdatensatz zur Verfügung steht. Um die Sicherheit von autonomen Systemen mittels eines Referenzdatensatzes nachzuweisen, müsste dieser Datensatz die Eigenheiten eines jeden Systems berücksichtigen, welche zu einer potenziell unsicheren Situation führen könnten.

Aus diesem Grund ist es im Stand der Technik bei diesen Systemen vorrangig subjektive Kriterien in Form von Expertenwissen einzusetzen. Infolge dieser Subjektivität können die erfassten Daten sowohl übervollständig oder aber unvollständig sein, was zu überhöhten Aufwänden einerseits und anderseits zu unkalkulierbaren Sicherheitsrisiken führen kann. Konkret kann das bedeuten, dass obwohl bereits alle Daten vorliegen, dennoch weitere Daten erhoben werden oder aber Risiken übersehen und daher nicht berücksichtigt werden. Es besteht also der Bedarf an Verfahren zur Ermittlung der Vollständigkeit von Daten.

### Offenbarung der Erfindung

Ein erster allgemeiner Aspekt der vorliegenden Offenbarung betrifft ein Verfahren zur Vollständigkeitsschätzung von Daten. Das Verfahren umfasst Empfangen eines Datensatzes als Ergebnis einer Mehrzahl von Beobachtungen aus einer Datenerfassung, Einteilen der Daten des Datensatzes in ein oder mehrere Szenarien, Eingruppieren 130 des einen oder der mehreren Szenarien in eine Mehrzahl von Szenarioklassen, wobei die Mehrzahl von Szenarioklassen die bereits beobachteten Szenarioklassen einer Gesamtmenge von Szenarioklassen umfasst, Schätzen, ob die bisher beobachteten Szenarioklassen ein Kriterium für die Szenarioklassenvollständigkeit im Hinblick auf die Gesamtmenge von Szenarioklassen erfüllen, Bestimmen, auf der Basis einer oder mehrerer Auftrittswahrscheinlichkeitsverteilungen, ob das eine oder die mehreren Szenarien, die einer Szenarioklasse zugeordnet sind, ein Kriterium für die Szenariovollständigkeit der entsprechenden Szenarioklasse erfüllen, und Ausgeben eines Befehls zum Beenden der Datenerfassung, wenn das Kriterium für die Szenarioklassenvollständigkeit und das Kriterium für die Szenariovollständigkeit erfüllt sind.

Ein zweiter allgemeiner Aspekt der vorliegenden Offenbarung betrifft ein Computersystem, das dafür ausgelegt ist, das Verfahren zur Vollständigkeitsschätzung von Daten gemäß dem ersten allgemeinen Aspekt (oder einer Ausführungsform davon) auszuführen.

Ein dritter allgemeiner Aspekt der vorliegenden Offenbarung betrifft ein Computerprogramm, das dafür ausgelegt ist, das Verfahren zur Vollständigkeitsschätzung von Daten gemäß dem ersten allgemeinen Aspekt (oder einer Ausführungsform davon) auszuführen.

Ein vierter allgemeiner Aspekt der vorliegenden Offenbarung betrifft ein computerlesbares Medium oder Signal, das das Computerprogramm gemäß dem dritten allgemeinen Aspekt (oder einer Ausführungsführungsform davon) speichert und/oder enthält.

Das in dieser Offenbarung vorgeschlagene Verfahren nach dem ersten allgemeinen Aspekt (oder einer Ausführungsform davon) kann dazu dienen, ein Verfahren zur Vollständigkeitsschätzung von Daten anhand bestimmter Kriterien bereitzustellen. Ein Vorteil der Techniken der vorliegenden Offenbarung kann darin gesehen werden, dass das Kriterium über die Vollständigkeit des Datensatzes objektiv ist, und generalisiert werden kann. In Beispielen kann verhindert werden, dass zu wenige Daten erhoben werden bzw. bestimmte Szenarioklassen oder Szenarien innerhalb einer Szenarioklasse nicht beobachtet werden.

Dahingehend können auftretende Risiken reduziert werden, die entstünden, wenn ein autonomes System auf einem unvollständigen Datensatz getestet, validiert oder verifiziert würde. Dadurch kann in Beispielen die Sicherheit zum Beispiel für Fahrzeuginsassen eines autonomen Fahrzeugs erhöht werden. In Beispielen kann die Sicherheit für Personen erhöht werden, die mit einem Roboter interagieren. Weiter kann in Beispielen verhindert werden, dass zu lange bzw. zu viele Daten erhoben werden. Zum Beispiel kann dadurch verhindert werden, dass Daten erhoben werden, im Versuch Szenarien zu beobachten, die in der Betriebsumgebung des autonomen Systems gar nicht beobachtbar sind. Hieraus können sich Kostenvorteile bei der Datenerfassung ergeben.

Die Techniken der vorliegenden Offenbarung können weiter den Vorteil haben, einerseits ein Stoppkriterium zum Auffinden von Szenarien zu bestimmen, und andererseits auch ein Stoppkriterium zur Erfassung der Daten eines Szenarios zu bestimmen. Das heißt, ein Vorteil kann darin gesehen werden, dass die Datenqualität pro Szenarioklasse oder pro Szenario erhöht werden kann. Weiter kann das Verfahren dazu dienen, die Schätzung der Wahrscheinlichkeitsverteilungen der Daten zu bestimmen und zugehörige Ungenauigkeiten zu bestimmen. Dies kann vorteilhaft sein, um beispielsweise den Datenerfassungsprozess zu verbessern.

Weitere Vorteile können darin bestehen, dass die erfassten Daten, die nach dem vorliegenden Verfahren als vollständig bewertet werden, dazu dienen können, Fahrzeugfunktionen, Roboterfunktionen, Gebäudeautomatisierungsfunktionen, Elektrowerkzeugautomatisierungsfunktionen, und/oder Haushaltsgeräteautomatisierungsfunktionen zu testen, zu validieren und/oder zu verifizieren. In Beispielen können die Daten dazu dienen, Maschinelles-Lernen-Modelle zu trainieren, zu testen, und/oder zu validieren. Ein weiterer Vorteil kann darin bestehen, dass die Maschinelles-Lernen-Modelle verwendet werden können, eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln.

Einige Begriffe werden in der vorliegenden Offenbarung in folgender Weise verwendet:
Ein "Szenario" kann zum Beispiel allgemein eine Gruppierung oder Klassifizierung von bestimmten Situationen, Bedingungen oder Umgebungen beschreiben, in denen ein autonomes System oder eine Technologie agieren soll oder kann. Szenarien können zum Beispiel verwendet werden, um eine Vielzahl von potentiellen Einsatzszenarien zu strukturieren und zu organisieren, um eine systematische Analyse, Entwicklung oder Prüfung ermöglichen zu können. Beispiele für Szenarien können das Fahren auf der Autobahn mit 130 km/h, das Fahren in der Tempo-30-Zone, oder das Fahren auf der Landstraße bei starkem Schneefall sein.

Eine Szenarioklasse kann Szenarien gemäß einem Kriterium eingruppieren. Da jedes System unterschiedliche Verarbeitungsstufen aufweisen kann, kann es auch verschiedenste Kriterien für die Definition einer Szenarioklasse geben. Zwei Beispiele:
Das Kriterium "Aktuation der Bremse" würde demzufolge alle Szenarien, die dem Ego-Fahrzeug ein Bremsmanöver abverlangt in eine Klasse darstellen. Alternativ würde das Kriterium "Obstacle Detection" dazu führen, dass alle Szenarien mit Fußgängern, Fahrzeugen oder Gegenständen, die sich in der Spur des Ego-Fahrzeugs befinden in eine Klasse aggregieren. Zu einer Szenarioklasse können unterschiedliche Szenarien gehören, die durch Eigenschaften oder Parameter näher beschrieben werden können. Zum Beispiel kann innerhalb einer Szenarioklasse ein erster Parameterwert eines Parameters ein erstes Szenario und ein zweiter Parameterwert des gleichen Parameters ein zweites Szenario definieren.

Ein "Fahrzeug" kann jegliche Vorrichtung, die Passagiere und/oder Fracht transportiert, sein. Ein Fahrzeug kann ein Kraftfahrzeug (zum Beispiel ein PKW oder ein LKW) sein, aber auch ein Schienenfahrzeug. Ein Fahrzeug kann auch ein motorisiertes Zwei- oder Dreirad sein. Allerdings können auch schwimmende und fliegende Vorrichtungen Fahrzeuge sein. Fahrzeuge können zumindest teilautonom operierend oder assistiert sein.

### Kurzbeschreibung der Figuren

- **Fig. 1-A bis 1-C**: illustriert schematisch ein beispielhaftes Verfahren zur Vollständigkeitsschätzung von Daten.
- **Fig. 2**: illustriert schematisch eine beispielhafte Architektur zur Ausführung des Verfahrens Vollständigkeitsschätzung von Daten.
- **Fig. 3**: illustriert schematisch eine Veranschaulichung der Mehrzahl von Szenarioklassen und der Gesamtmenge von Szenarioklassen.

### Detaillierte Beschreibung

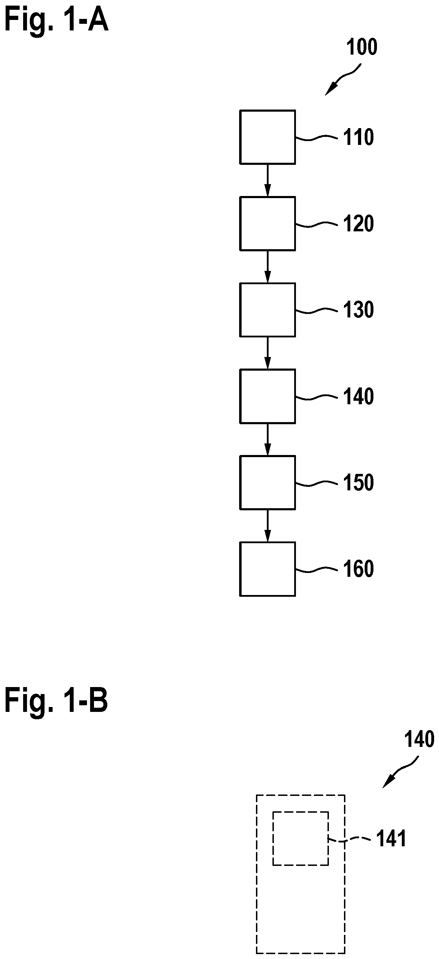

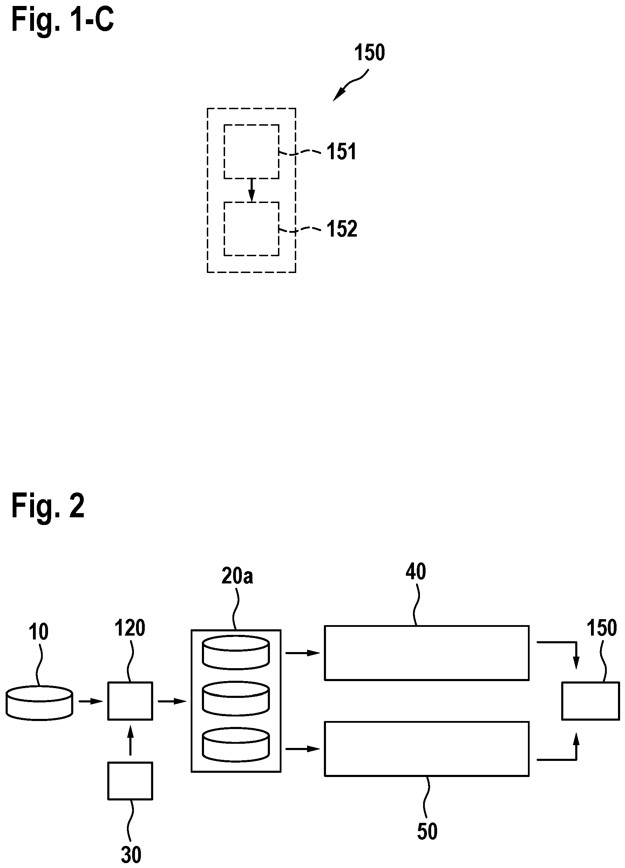

Fig. 1 -A bis 1-C sind Fluss-Diagramme, das mögliche Schritte des Verfahrens 100 zur Vollständigkeitsschätzung von Daten zeigen.

Das Verfahren 100 zur Vollständigkeitsschätzung von Daten umfasst Empfangen 110 eines Datensatzes 10 als Ergebnis einer Mehrzahl von Beobachtungen aus einer Datenerfassung, Einteilen 120 der Daten des Datensatzes 10 in ein oder mehrere Szenarien, Eingruppieren 130 des einen oder der mehreren Szenarien in eine Mehrzahl von Szenarioklassen 20a, wobei die Mehrzahl von Szenarioklassen 20a die bereits beobachteten Szenarioklassen einer Gesamtmenge von Szenarioklassen 20 umfasst. Weiter umfasst das Verfahren 100 Schätzen 140, ob die bisher beobachteten Szenarioklassen 20a ein Kriterium für die Szenarioklassenvollständigkeit im Hinblick auf die Gesamtmenge von Szenarioklassen 20 erfüllen, Bestimmen 150, auf der Basis einer oder mehrerer Auftrittswahrscheinlichkeitsverteilungen, ob das eine oder die mehreren Szenarien, die einer Szenarioklasse zugeordnet sind, ein Kriterium für die Szenariovollständigkeit der entsprechenden Szenarioklasse erfüllen, und Ausgeben 160 eines Befehls zum Beenden der Datenerfassung, wenn das Kriterium für die Szenarioklassenvollständigkeit und das Kriterium für die Szenariovollständigkeit erfüllt sind. In Beispielen kann das Verfahren 100 Zusammenführen des Kriteriums für die Szenarioklassenvollständigkeit und des Kriteriums für die Szenariovollständigkeit zu einem Gesamtkriterium für die Datenvollständigkeit, umfassen. In Beispielen kann das Ausgeben 160 des Befehls zum Beenden der Datenerfassung durchgeführt werden, wenn das Gesamtkriterium erfüllt ist.

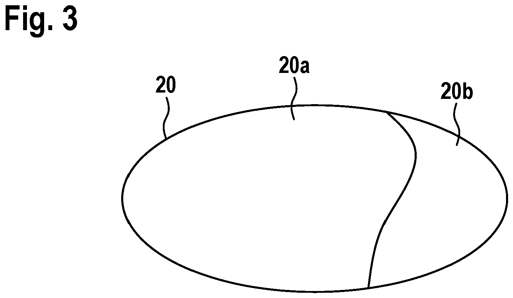

In einem Beispiel können die Daten des Datensatzes 10 auf Basis eines diskreten Modells 30 zu Szenarioklassen zugeordnet werden, wie beispielsweise in **Fig. 2** gezeigt. Beispielsweise kann das diskrete Modell ein Histogramm, Markov-Kette, Support-Vector-Machine (SVM), k-nächster-Nachbar-Klassifizierer (k-NN), oder eine logistische Regression umfassen. In Beispielen kann das Einteilen 120 der Daten des Datensatzes 10 das Bilden eines Histogramms umfassen, das die Szenarioklasse 20a abbildet. In Beispielen kann die Gesamtmenge von Szenarioklassen 20 die Gesamtheit aller, oder nahezu aller Szenarioklassen, die während des Betriebs des autonomen Systems potentiell vorkommen können, umfassen. In **Fig. 3** ist eine Veranschaulichung der Mehrzahl von Szenarioklassen 20a und der Gesamtmenge von Szenarioklassen 20 dargestellt. In Beispielen kann die Gesamtmenge von Szenarioklassen 20 die Szenarioklassen umfassen, die realistischerweise, das heißt mit einer bestimmten Wahrscheinlichkeit, vorkommen können. In Beispielen können die bereits beobachteten Szenarioklassen 20a eine erste Teilmenge der Gesamtmenge von Szenarioklassen 20 bilden und die noch nicht beobachteten Szenarioklassen 20b eine zweite Teilmenge der Gesamtmenge von Szenarioklassen 20 bilden. In Beispielen kann das Bestimmen 150 der Vollständigkeit der beobachteten Szenarioklassen und/oder Szenarien die Bestimmung von Auftrittswahrscheinlichkeiten von Daten, die bisher nicht beobachtet worden sind, umfassen. In Beispielen können die Auftrittswahrscheinlichkeiten mittels der Auftrittswahrscheinlichkeitsverteilungen bestimmt werden. In Beispielen werden diese Auftrittswahrscheinlichkeiten mittels Schätzverfahren geschätzt.

In einer Ausführungsform kann das Kriterium für die Szenarioklassenvollständigkeit auf einer Wahrscheinlichkeit *τ* basieren, dass jede Szenarioklasse der Gesamtmenge von Szenarioklassen 20 mindestens einmal beobachtet worden ist. In Beispielen kann das Kriterium für die Szenarioklassenvollständigkeit umfassen, dass die Wahrscheinlichkeit, dass jede Szenarioklasse der Gesamtmenge von Szenarioklassen 20 einmal beobachtet worden ist, höher ist als ein Schwellwert. In Beispielen kann die Wahrscheinlichkeit, dass jede Szenarioklasse der Gesamtmenge von Szenarioklassen 20 einmal beobachtet worden ist auf der Basis von Lösungsansätzen des "Sammelkartenproblems" (engl. "Coupon Collector's Problem") bestimmt werden.

Beispielsweise kann eine Zufallsvariable X definiert werden, die die Anzahl der Beobachtungen beschreibt, die notwendig sind, bis jede Szenarioklasse der Gesamtmenge von Szenarioklassen 20 mindestens einmal beobachtet worden ist. In Beispielen kann weiter die Wahrscheinlichkeit *P*(*X* ≤ *B*)*,* dass jede Szenarioklasse der Gesamtmenge von Szenarioklassen 20 mindestens einmal nach *B* Beobachtungen beobachtet worden ist, bestimmt werden. Beispielsweise kann für die Wahrscheinlichkeit, dass jede Szenarioklasse der Gesamtmenge von Szenarioklassen 20 einmal beobachtet wurde, analytisch mittels *P*(*X*) ~ (1 - Π(1 - *e*^{-*px*})) approximiert werden. Alternativ besteht die Möglichkeit ein nummerisches Verfahren einzusetzen, in dem Monte-Carlo Simulationen zur Schätzung der benötigten Beobachtungsdauer bis zum Eintreten aller Szenarioklassen eingesetzt werden. Für eine spezifische Wahrscheinlichkeit *τ* gibt sich dann die Frage, wie viele Observationen mindestens benötigt werden, bis alle Szenarioklassen mit einer Wahrscheinlichkeit größer *τ* mindestens einmal beobachtet werden können.

Für die Anwendung dieser beispielhaften Verfahren zur Schätzung von Observationsdauer bis zum Beobachten einer bisher unbekannten Szenarioklasse ist das diskrete Modell, welches dem analytischen oder nummerischen Verfahren zugrunde liegt, entsprechend zu erweitern, so dass eine bisher unbekannte Szenarioklasse mit einer gewissen Wahrscheinlichkeit modelliert wird. Beispielsweise kann diese Erweiterung per Expertenschätzung oder über weiterführende Schätzverfahren (bspw. nicht-lineare Regression) erfolgen.

Um der Frage nachzugehen, um wie viele Szenarioklassen das diskrete Modell zu erweitern ist, kann die totale Anzahl von Szenarioklassen geschätzt werden. In Beispielen kann die Schätzung der Anzahl der Szenarioklassen mittels eines diskreten Schätzers 40 durchgeführt werden. Beispielsweise lässt sich hierfür das Verfahren von Chao (Chao, Anne, and Shen-Ming Lee. "Estimating the number of classes via sample coverage." Journal of the American statistical Association 87.417 (1992): 210-217*)* einsetzen, welches einen Sampling-Ansatz für die Schätzung der totalen Szenarioklassen benutzt. Dafür wird modelliert, wie viele Szenarioklassen wie oft beobachtet wurden. Das Verhältnis der einmal sowie zweimal beobachteten Szenarioklassen kann beispielsweise für die Schätzung der bisher noch nicht beobachteten Szenarioklassen herangezogen werden. In Beispielen kann auf der Basis der totalen Anzahl von Szenarioklassen eine Validität bezogen auf die Anzahl der Gesamtmenge der Szenarioklassen 20a bestimmt werden.

In einem Beispiel kann jede Szenarioklasse der Mehrzahl von Szenarioklassen 20a einen oder mehrere Parameter umfassen. In Beispielen kann der empfangene Datensatz Parameterwerte des einen oder der mehreren Parameter umfassen. In Beispielen kann ein Szenario einer Szenarioklasse durch mindestens einen Parameterwert charakterisiert sein. Zum Beispiel kann innerhalb einer Szenarioklasse ein erster Parameterwert eines Parameters ein erstes Szenario und ein zweiter Parameterwert des gleichen Parameters ein zweites Szenario definieren.

In Beispielen kann das Eingruppieren 130 des einen oder der mehreren Szenarien in eine Mehrzahl von Szenarioklassen 20a auf Basis eines gemeinsamen Merkmals des einen oder der mehreren Szenarien durchgeführt werden. Zum Beispiel kann das Merkmal ein Kriterium wie es voranstehend erklärt wurde umfassen. Zum Beispiel kann das Merkmal das Kriterium "Aktuation der Bremse" und/oder das Kriterium "Hinderniserkennung" (engl. "Obstacle Detection") umfassen.

In Beispielen kann jede Szenarioklasse der Merzahl von Szenarioklassen 20a eine oder mehrere Eigenschaften besitzen. In Beispielen kann der Datensatz 10 Attribute des einen oder der mehreren Eigenschaften umfassen. In Beispielen kann ein Szenario einer Szenarioklasse durch mindestens ein Attribut charakterisiert sein. In Beispielen kann sich die eine oder die mehreren Eigenschaften von dem gemeinsamen Merkmal ableiten.

In Beispielen können die Szenarien , die einer Szenarioklasse zugeordnet sind, innerhalb dieser Szenarionklasse mit Auftrittswahrscheinlichkeitsverteilungen auftreten. In Beispielen kann die Auftrittswahrscheinlichkeit von den Parameterwerten des einen oder der mehreren Parameter oder den Werten des einen oder der mehreren Attribute abhängen.

Das Verfahren 100 kann das Ermitteln der einen oder mehreren Auftrittswahrscheinlichkeitsverteilungen für die Attribute und/oder Parameterwerte umfassen. In Beispielen können die Attribute oder Parameterwerte durch die eine oder mehreren Auftrittswahrscheinlichkeitsverteilungen beschrieben werden. In Beispielen kann optional ein Kriterium für die Auftrittswahrscheinlichkeitsverteilungen definiert werden. In Beispielen kann das Kriterium gemäß Anwendungsfall ausgewertet werden.

In Beispielen kann das Bestimmen 150 auf einer Auftrittswahrscheinlichkeit mindestens eines Parameterwertes und/oder eines Attributs basieren. In Beispielen kann die Auftrittswahrscheinlichkeit mittels der Auftrittswahrscheinlichkeitsverteilung des entsprechenden Parameters und/oder der Eigenschaft bestimmt werden. In Beispielen kann das Verfahren 100 Zusammenfassen der einen oder mehreren Auftrittswahrscheinlichkeitsverteilungen aller Parameter und/oder Eigenschaften eines Szenarios zu einer mehrdimensionalen Auftrittswahrscheinlichkeitsverteilung umfassen.

In Beispielen kann das Schätzen 130 mittels eines kontinuierlichen Schätzers 50 durchgeführt werden. In Beispielen können die Auftrittswahrscheinlichkeitsverteilungen auf Basis bereits empfangener Parameterwerte und/oder Attribute ermittelt werden. In Beispielen können die Auftrittswahrscheinlichkeitsverteilungen Auskunft über Auftrittswahrscheinlichkeiten bisher nicht beobachteter Parameterwerte und/oder Attribute geben. In Beispielen können die Auftrittswahrscheinlichkeiten empfangener Daten die Auftrittswahrscheinlichkeiten der Parameterwerte und/oder Attribute umfassen oder diese repräsentieren. Beispielsweise kann eine Szenarioklasse die relevanten Parameter oder Eigenschaften der Szenarien definieren. In Beispielen kann das Verfahren Auswählen der relevanten Parameter oder Eigenschaften für die Szenarien in einer Szenarioklasse aus dem Datensatz 10 umfassen. Zur Veranschaulichung kann das Szenario "Folgefahrt ohne kritische Situation" beschrieben werden. Für diese Szenarioklasse können die Szenarien zum Beispiel durch relevante Parameter wie zum Beispiel die Geschwindigkeit, die Relativgeschwindigkeit zum vorausfahrenden Fahrzeug, und/oder der Abstand zum vorausfahrenden Fahrzeug beschrieben werden. In Beispielen kann für jeden Parameter ein Raum möglicher Parameterwerte definiert sein. Zum Beispiel kann der Raum möglicher Parameterwerte für den Parameter "Abstand" die Werte 0.5 m, 0.3 m, 0.2m, 1.2 m oder weiter umfassen. In Beispielen kann der Raum möglicher Parameterwerte in diskrete Teile unterteilt werden. Beispielsweise kann die Diskretisierung auf der physikalischen Auflösungsgrenze eines Erfassungssystems, das zur Datenerfassung benutzt wird, basieren. Zum Beispiel kann für den Parameter "Relativabstand" eine Auflösung von 10 cm angenommen werden, wenn dies der Auflösungsgrenze des Radars entspricht. In Beispielen kann das Verfahren 100 das Ermitteln der einen oder mehreren Auftrittswahrscheinlichkeitsverteilungen der Parameterwerte für jede Szenarioklasse der Mehrzahl von Szenarioklassen 20a umfassen.

In einer Ausführungsform kann das Kriterium für die Szenariovollständigkeit umfassen, dass die Auftrittswahrscheinlichkeit für mindestens ein Attribut und/oder einen Parameterwert einen Schwellwert durchbricht. Mittels der einen oder mehreren Auftrittswahrscheinlichkeitsverteilungen der Parameterwerte und/oder Attribute können die Auftrittswahrscheinlichkeiten bisher nicht beobachteter Daten bestimmt werden. In Beispielen können die Auftrittswahrscheinlichkeiten für bisher nicht beobachtete Daten bzw. Parameterwerte bzw. Attribute innerhalb einer Szenarioklasse kleiner sein als der Schwellwert. In Beispielen kann daraus geschlossen werden, dass die entsprechende Szenarioklasse als vollständig beobachtet eingestuft werden kann.

In Beispielen kann das Kriterium für die Szenariovollständigkeit erfüllt sein, wenn in jeder Szenarioklasse der bereits beobachteten Szenarioklassen 20a die Auftrittswahrscheinlichkeiten für bisher nicht beobachtete Daten kleiner als der Schwellwert sind. Wie voranstehend beschrieben, kann für eine Szenarioklasse die relevanten Parameter und/oder Eigenschaften bestimmt werden. In Beispielen kann das Kriterium für die Szenariovollständigkeit erfüllt sein, wenn in jeder Szenarioklasse der bereits beobachteten Szenarioklassen 20a die Auftrittswahrscheinlichkeiten für bisher nicht beobachtete Daten bzw. Parameterwerte der relevanten Parameter bzw. Attribute der relevanten Eigenschaften kleiner als der Schwellwert sind. Dies kann vorteilhaft sein, um ein Stoppkriterium zu definieren, sodass die Datenerfassung nicht fortgeführt wird, obwohl es unwahrscheinlicher geworden ist, dass fehlende Parameterwerte und/oder Attribute noch beobachtet werden.

In Beispielen kann das Kriterium für die Szenariovollständigkeit erfüllt sein, wenn eine gewichtete Funktion über die Auftretenswahrscheinlichkeiten der Szenarien in einer Szenarioklasse kleiner als ein Schwellwert ist.

In einer Ausführungsform können die eine oder mehreren Auftrittswahrscheinlichkeitsverteilungen mittels eines nichtparametrischen Verfahrens ermittelt werden. In einer Ausführungsform kann das nichtparametrische Verfahren eine Kerndichteschätzung umfassen.

In einer Ausführungsform kann das Verfahren 100 das Berechnen einer Abweichung zwischen der einen oder den mehreren Auftrittswahrscheinlichkeitsverteilungen bisher beobachteter Daten und einer oder mehrerer neu modellierter Auftrittswahrscheinlichkeitsverteilungen auf der Basis neu empfangener Daten umfassen. In Beispielen kann das Kriterium für die Szenariovollständigkeit umfassen, dass die Abweichung größer als ein Schwellwert ist. Zum Beispiel kann das Berechnen der Abweichung auf mindestens einer von der Kolmogorow-Smirnow-Distanz (diskrete Form), der Kullback-Leibler-Divergenz (diskrete Form), dem Anderson-Darling-Test, oder dem Chi-Quadrat-Test basieren.

In Beispielen können Auftrittswahrscheinlichkeitsverteilungen zu unterschiedlichen Zeitpunkten während der Datenerfassungen ermittelt werden, die sich jeweils voneinander unterscheiden. Beispielsweise kann bei einer Kerndichteschätzung eine kleine Bandbreite verwendet werden, die unter der physikalischen Auflösungsgrenze für den betreffenden Parameter liegt. In Beispielen kann das Verfahren 100 das Vergleichen der ermittelten Auftrittswahrscheinlichkeitsverteilungen umfassen. In Beispielen kann das Kriterium für die Szenariovollständigkeit umfassen, dass eine Abweichung zwischen den ermittelten Auftrittswahrscheinlichkeitsverteilungen einen Schwellwert überschreitet.

In einer Ausführungsform kann das Verfahren 100 fortgesetzt werden, wenn das Kriterium für die Szenarioklassenvollständigkeit und das Kriterium für die Szenariovollständigkeit nicht erfüllt sind. In Beispielen kann das Verfahren 100 weiter Bestimmen 152 eines Abstandsmaßes zwischen Auftrittswahrscheinlichkeitsverteilungen neu empfangener Daten und den ermittelten einen oder mehreren Auftrittswahrscheinlichkeitsverteilungen, um eine erste Validität der ermittelten einen oder mehreren Auftrittswahrscheinlichkeitsverteilungen zu bestimmen, umfassen. In Beispielen kann das Kriterium für die Datenvollständigkeit auf der ersten Validität basieren. In Beispielen kann die Validität erfüllt sein, wenn das Abstandsmaß zwischen Auftrittswahrscheinlichkeitsverteilungen neu empfangener Daten und der einen oder den mehreren Auftrittswahrscheinlichkeitsverteilungen der Parameterwerte des einen oder der mehreren Parameter und/oder der Attribute der einen oder mehreren Eigenschaften kleiner als ein Abstandsmaßschwellwert ist. In Beispielen kann das Kriterium für die Szenariovollständigkeit erfüllt sein, wenn die Auftrittswahrscheinlichkeit für bisher nicht beobachtete Daten innerhalb einer Szenarioklasse kleiner ist als der Schwellwert und das Abstandsmaß zwischen den Auftrittswahrscheinlichkeitsverteilungen der neu empfangenen Daten und der einen oder den mehreren Auftrittswahrscheinlichkeitsverteilungen kleiner ist als der Abstandsmaßschwellwert. In Beispielen kann eine andere Methode zur Bestimmung der einen oder der mehreren Auftrittswahrscheinlichkeitsverteilungen verwendet werden, wenn die Validität nicht gegeben ist. Zum Beispiel kann die Kerndichteschätzung mit anderer Bandbreite durchgeführt werden, wenn die Validität nicht gegeben ist.

In einer Ausführungsform kann das Verfahren 100 Durchführen 151 eines Hypothesentests unter Verwendung des Datensatzes 10, um eine zweite Validität der ermittelten einen oder mehreren Auftrittswahrscheinlichkeitsverteilungen zu bestimmen, umfassen. In Beispielen kann das Kriterium für die Szenariovollständigkeit auf der zweiten Validität basieren. In Beispielen kann der Hypothesentest lauten, dass die Daten zu der ermittelten einen oder mehreren Auftrittswahrscheinlichkeitsverteilungen passen.

In einem Beispiel kann das Verfahren dazu verwendet werden, die erste Validität, die zweite Validität, und die Validität bezogen auf die Anzahl zusammenzuführen und daraus eine Gesamt-Validität für den Datensatz zu bestimmen. In Beispielen kann der Datensatz als vollständig bewertet werden, wenn die Validität für die Schätzung der unbeobachteten Szenarioklassen sowie die Validität für die Szenarien in allen beobachteten Szenarioklassen gegeben ist.

In manchen Ausführungsformen kann das Verfahren Verwenden des Datensatzes zur Validierung und/oder Verifikation einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion umfassen. Beispielsweise kann mit dem Verfahren 100 ein Kriterium bereitgestellt werden, dass der Datensatz 10 mit dem eine Validierung und/oder Verifikation durchgeführt wird, als vollständig eingestuft ist.

In einer Ausführungsform kann das Verfahren 100 Verwenden des Datensatzes 10 zum Trainieren, Testen und/oder Validieren eines Maschinelles-Lernen-Modell umfassen. In Beispielen kann das Verfahren Verwenden des Maschinelles-Lernen-Modells, um eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln, umfassen. In Beispielen kann das Verfahren 100 das Einspielen des Maschinelles-Lernen-Modells auf ein Computersystem eines Fahrzeugs, eines Roboters, eines Gebäudes, eines Elektrowerkzeugs, eines Haushaltsgeräts, einer Werkzeugmaschine, eines persönlichen Assistenten, eines Zutrittskontrollsystems, und/oder eines Medizingeräts umfassen.

In Beispielen kann ein Roboter ein (autonom oder assistiert fahrendes) Fahrzeug umfassen. Zum Beispiel kann die Fahrzeugfunktion eine Funktion zum autonomen und/oder assistierten Fahren sein. In manchen Beispielen kann das Maschinelles-Lernen-Modell und/oder das Verfahren 100 zur Vollständigkeitsschätzung von Daten zur Ausführung auf einem Computersystem eines Fahrzeugs (bspw. eines autonom, hochautomatisiert oder assistiert fahrenden Fahrzeugs) ausgelegt sein, d.h. zum Beispiel computerimplementiert sein. Zum Beispiel kann das Computersystem lokal in dem Fahrzeug implementiert sein oder (zumindest teilweise) in einem Backend, das mit dem Fahrzeug kommunikativ verbunden ist, implementiert sein. Beispielsweise kann das Computersystem ein Steuergerät umfassen, auf dem das Verfahren 100 und/oder das Maschinelles-Lernen-Modell ausgeführt werden kann. In manchen Beispielen kann das Fahrzeug ein Computersystem mit einer Kommunikationsschnittstelle umfassen, die Kommunikation mit einem Backend ermöglicht. Beispielsweise kann in diesem Backend das Verfahren 100 zur Vollständigkeitsschätzung von Daten und/oder das Maschinelles-Lernen-Modell ausgeführt werden. In Beispielen können Steuergerätefunktionen in Fahrzeugen das Verfahren 100 zur Vollständigkeitsschätzung und/oder das Maschinelles-Lernen-Modell umfassen oder darauf zugreifen, beispielweise wenn diese remote in einer Cloud ausgeführt werden. In Beispielen können mittels des Datensatzes 10 Steuergerätefunktionen in Fahrzeugen validiert und/oder verifiziert werden.

In anderen Beispielen und wie voranstehend angedeutet kann das Verfahren 100 zur Vollständigkeitsschätzung von Daten und/oder das Maschinelles-Lernen-Modell zur Ausführung in einem Roboter ausgelegt sein. In Beispielen kann der Datensatz 10 zur Validierung und/oder Verifizierung einer Roboterfunktion ausgelegt sein. In Beispielen kann das Maschinelles-Lernen-Modell zur Steuerung und/oder Überwachung einer Roboterfunktion ausgelegt sein (insbesondere zur Steuerung und/oder Überwachung einer Bewegungsfunktion eines Roboters). In manchen Beispielen kann das Verfahren 100 und/oder das Maschinelles-Lernen-Modell auf einem Computersystem eines Roboters ausgeführt werden. Zum Beispiel kann das Computersystem lokal in dem Roboter implementiert sein oder (zumindest teilweise) in einem Backend, das mit dem Roboter kommunikativ verbunden ist, implementiert sein.

In einem Beispiel kann das Verfahren 100 zur Vollständigkeitsschätzung von Daten und/oder das Maschinelles-Lernen-Modell zur Ausführung in einem Gebäude ausgelegt sein. In Beispielen kann der Datensatz 10 zur Validierung und/oder Verifikation von Gebäudefunktionen dienen (insbesondere zur Steuerung von Gebäudeautomatisierungsfunktionen). In Beispielen kann das Maschinelles-Lernen-Modell zur Steuerung und/oder Überwachung von Gebäudefunktionen dienen (insbesondere zur Steuerung von Gebäudeautomatisierungsfunktionen). Zum Beispiel kann die Gebäudefunktion eine Funktion zum Regeln von Raumtemperatur, Beleuchtung und/oder Sicherheitseinrichtung sein. In manchen Beispielen kann das Verfahren 100 das Maschinelles-Lernen-Modell zur Ausführung auf einem Computersystem innerhalb des Gebäudes ausgelegt sein. Zum Beispiel kann das Computersystem lokal in dem Gebäude implementiert sein oder (zumindest teilweise) in einem Backend, das mit dem Gebäude kommunikativ verbunden ist, implementiert sein. Zum Beispiel kann das Computersystem ein Steuerungssystem oder ein Gebäudeautomatisierungssteuergerät umfassen, auf dem das Verfahren 100 zur Vollständigkeitsschätzung von Daten und/oder das Maschinelles-Lernen-Modell ausgeführt werden können. In Beispielen kann das Gebäude über ein Computersystem mit einer Kommunikationsschnittstelle verfügen, die die Kommunikation mit einem externen Backend ermöglicht. Beispielsweise kann in diesem Backend das Verfahren 100 zur Vollständigkeitsschätzung von Daten und/oder das Maschinelles-Lernen-Modell ausgeführt werden. In Beispielen können Eingangsdaten des Maschinelles-Lernen-Modells und/oder Betriebsdaten auf Informationen wie Raumtemperatur, Helligkeit oder Anwesenheit von Personen basieren. In einigen Fällen können Eingangsdaten des Maschinelles-Lernen-Modell und/oder Betriebsdaten eine relative Temperaturdifferenz, Beleuchtungsstärke oder Entfernung zu einem bestimmten Ort oder Objekt im Gebäude umfassen. Informationen können in Beispielen aus einem Netzwerk stammen, wie beispielsweise Sensordaten oder Einstellungen von anderen Gebäuden oder Gebäudekomponenten. Diese Informationen können durch Kommunikation zwischen Gebäuden oder Gebäudeteilen oder über ein externes Backend bereitgestellt werden.

In anderen Beispielen kann das Verfahren 100 und/oder das Maschinelles-Lernen-Modell zur Ausführung in einem Elektrowerkzeug ausgelegt sein. In Beispielen kann der Datensatz 10 zur Validierung und/oder Verifikation einer Elektrowerkzeugfunktion ausgelegt sein (insbesondere einer Arbeitsfunktion des Elektrowerkzeugs). In Beispielen kann das Maschinelles-Lernen-Modell zur Steuerung und/oder Überwachung einer Elektrowerkzeugfunktion ausgelegt sein (insbesondere einer Arbeitsfunktion des Elektrowerkzeugs). In manchen Beispielen kann das Verfahren 100 und/oder das Maschinelles-Lernen-Modell auf einem Computersystem des Elektrowerkzeugs ausgeführt werden. Zum Beispiel kann das Computersystem lokal in dem Elektrowerkzeug implementiert sein oder (zumindest teilweise) in einem Backend, das mit dem Elektrowerkzeug kommunikativ verbunden ist, implementiert sein.

In anderen Beispielen kann das Verfahren 100 zur Vollständigkeitsschätzung von Daten und/oder das Maschinelles-Lernen-Modell zur Ausführung in einem Haushaltsgerät ausgelegt sein. In Beispielen kann der Datensatz 10 zur Validierung und/oder Verifikation einer Haushaltsgerätefunktion ausgelegt sein (insbesondere zur Steuerung und/oder Überwachung einer Arbeitsfunktion des Haushaltsgeräts). In Beispielen kann das Maschinelles-Lernen-Modell zur Steuerung und/oder Überwachung einer Haushaltsgerätefunktion ausgelegt sein (insbesondere zur Steuerung und/oder Überwachung einer Arbeitsfunktion des Haushaltsgeräts). In manchen Beispielen kann das Verfahren 100 und/oder das Maschinelles-Lernen-Modell auf einem Computersystem des Haushaltsgeräts ausgeführt werden. Zum Beispiel kann das Computersystem lokal in dem Haushaltsgerät implementiert sein oder (zumindest teilweise) in einem Backend, das mit dem Haushaltsgerät kommunikativ verbunden ist, implementiert sein.

In weiteren Beispielen kann der Datensatz 10 zur Validierung und/oder Verifikation einer Funktion einer Werkzeugmaschine, einem persönlichen Assistenten, einem Zutrittskontrollsystem, und/oder einem Medizingerät dienen. In Beispielen kann das Maschinelles-Lernen-Modell zur Ausführung in einer Werkzeugmaschine, einem persönlichen Assistenten, einem Zutrittskontrollsystem, und/oder einem Medizingerät, zum Beispiel zur medizinischen Bildgebung ausgelegt sein und/oder über ein Netzwerk zugreifbar sein.

In Beispielen kann der Datensatz 10 Audiodaten und/oder Videodaten umfassen. In Beispielen kann die Datenerfassung im Fahrbetriebs eines Fahrzeugs durchgeführt werden. In Beispielen kann der Datensatz 10 Sensorsignale umfassen, insbesondere Sensorsignale von einem Sensor zur Messung von Geschwindigkeit, Abstand, Drehrate, Stromstärke, Spannung, Temperatur, Druck, Luftdruck, Gewicht, Verformung, Fluss einer Flüssigkeit oder eines Gases, oder Zusammensetzung eines Gases. In Beispielen kann der Datensatz 10 zur Objekterkennung dienen. In Beispielen kann der Datensatz bzw. die umfassten Sensordaten der semantischen Segmentierung zugeführt werden, zum Beispiel in Bezug auf Verkehrsschilder, Straßenoberflächen, Fußgänger, Fahrzeugen, elektrische Leitungen, Wasserleitungen, Gasleitungen, biochemische Reaktionen, oder physische Blockaden beispielsweise in der Pfadplanung.

In manchen Ausführungsformen können eine oder mehrere Verfahrensschritte des Verfahrens 100 computerimplementiert sein.

Offenbart wird weiterhin ein Computersystem, das dafür ausgelegt ist, das Verfahren 100 zur Vollständigkeitsschätzung von Daten auszuführen. Das Computersystem kann mindestens einen Prozessor und/oder mindestens einen Arbeitsspeicher umfassen. Das Computersystem kann weiterhin einen (nichtvolatilen) Speicher umfassen. In Beispielen können alle Schritte des Verfahrens 100 von dem Computersystem ausgeführt werden. In manchen Beispielen können einzelne Schritte des Verfahrens 100 durch das Computersystem ausgeführt werden. Optional können Ergebnisse einzelner Verfahrensschritte, die nicht durch das Computersystem ausgeführt werden, von dem Computersystem empfangen werden.

Offenbart wird weiterhin ein Computerprogramm, das dafür ausgelegt ist, das Verfahren 100 Vollständigkeitsschätzung von Daten auszuführen. Das Computerprogramm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computerlesbares Medium oder Signal, das das Computerprogramm oder mindestens einen Teil davon speichert und/oder enthält. Das Medium kann z.B. eines von RAM, ROM, EPROM, HDD, SDD, ... umfassen, auf/in dem das Signal gespeichert wird.

## Patentansprüche

1. Verfahren (100) zur Vollständigkeitsschätzung von Daten,
wobei das Verfahren umfasst:
- Empfangen (110) eines Datensatzes (10) als Ergebnis einer Mehrzahl von Beobachtungen aus einer Datenerfassung,
- Einteilen (120) der Daten des Datensatzes (10) in ein oder mehrere Szenarien,
- Eingruppieren (130) des einen oder der mehreren Szenarien in eine Mehrzahl von Szenarioklassen (20a), wobei die Mehrzahl von Szenarioklassen (20a) die bereits beobachteten Szenarioklassen einer Gesamtmenge von Szenarioklassen (20) umfasst,
- Schätzen (140), ob die bisher beobachteten Szenarioklassen (20a) ein Kriterium für die Szenarioklassenvollständigkeit im Hinblick auf die Gesamtmenge von Szenarioklassen (20) erfüllen,
- Bestimmen (150), auf der Basis einer oder mehrerer Auftrittswahrscheinlichkeitsverteilungen, ob das eine oder die mehreren Szenarien, die einer Szenarioklasse zugeordnet sind, ein Kriterium für die Szenariovollständigkeit der entsprechenden Szenarioklasse erfüllen,
- Ausgeben (160) eines Befehls zum Beenden der Datenerfassung, wenn das Kriterium für die Szenarioklassenvollständigkeit und das Kriterium für die Szenariovollständigkeit erfüllt sind.

2. Verfahren (100) gemäß Anspruch 1, wobei das Kriterium für die Szenarioklassenvollständigkeit auf einer Wahrscheinlichkeit basiert, dass jede Szenarioklasse der Gesamtmenge von Szenarioklassen (20) mindestens einmal beobachtet worden ist.

3. Verfahren (100) gemäß Anspruch 1 oder 2, wobei das Schätzen (140) Schätzen (141) der noch notwendigen Beobachtungen bis, zumindest mit der Wahrscheinlichkeit, jede Szenarioklasse der Gesamtmenge der Szenarioklassen (20) mindestens einmal beobachtet worden ist.

4. Verfahren (100) gemäß einem der vorhergehenden Ansprüche, wobei das Verfahren (100) weiter umfasst:
- Schätzen der totalen Anzahl der Szenarioklassen basierend auf der Mehrzahl von Szenarioklassen (20a), um eine Validität bezogen auf die Anzahl zu bestimmen.

5. Verfahren (100) gemäß einem der vorhergehenden Ansprüche, wobei das Eingruppieren (130) des einen oder der mehreren Szenarien in eine Mehrzahl von Szenarioklassen (20a) auf Basis eines gemeinsamen Merkmals des einen oder der mehreren Szenarien durchgeführt wird.

6. Verfahren (100) gemäß einem der vorhergehenden Ansprüche, wobei jede Szenarioklasse der Mehrzahl von Szenarioklassen (20a) einen oder mehrere Parameter umfasst und der Datensatz (10) Parameterwerte des einen oder der mehreren Parameter umfasst, und wobei ein Szenario einer Szenarioklasse durch mindestens einen Parameterwert charakterisiert ist.

7. Verfahren (100) gemäß einem der vorhergehenden Ansprüche, wobei jede Szenarioklasse der Mehrzahl von Szenarioklassen (20a) eine oder mehrere Eigenschaften besitzt und der Datensatz (10) Attribute des einen oder der mehreren Eigenschaften umfasst, und wobei ein Szenario einer Szenarioklasse durch mindestens ein Attribut charakterisiert ist.

8. Verfahren (100) gemäß Anspruch 6 oder 7, wobei die einen oder mehreren Auftrittswahrscheinlichkeiten für die Attribute oder Parameterwerte ermittelte Auftrittswahrscheinlichkeiten umfassen, wobei optional ein Kriterium für die Auftrittswahrscheinlichkeitsverteilungen definiert wird und gemäß Anwendungsfall ausgewertet wird.

9. Verfahren (100) gemäß Anspruch 8, wobei das Kriterium für die Szenariovollständigkeit umfasst, dass die Auftrittswahrscheinlichkeit für mindestens ein Attribut und/oder einen Parameterwert einen Schwellwert durchbricht.

10. Verfahren (100) gemäß Anspruch 8 oder 9, wobei das Verfahren fortgesetzt wird, wenn das Kriterium für die Szenarioklassenvollständigkeit und das Kriterium für die Szenariovollständigkeit nicht erfüllt sind, und das Verfahren weiter umfasst
- Bestimmen (152) eines Abstandsmaßes zwischen Auftrittswahrscheinlichkeitsverteilungen neu empfangener Daten und den ermittelten einen oder mehreren Auftrittswahrscheinlichkeitsverteilungen, um eine erste Validität der ermittelten einen oder mehreren Auftrittswahrscheinlichkeitsverteilungen zu bestimmen, und wobei das Kriterium für die Szenariovollständigkeit weiter auf der ersten Validität basiert.

11. Verfahren (100) gemäß einem der vorhergehenden Ansprüche, wobei das Verfahren (100) weiter umfasst,
- Durchführen (151) eines Hypothesentests unter Verwendung des Datensatzes, um eine zweite Validität der ermittelten einen oder mehreren Auftrittswahrscheinlichkeitsverteilungen zu bestimmen, und wobei das Kriterium für die Szenariovollständigkeit weiter auf der zweiten Validität basiert.

12. Verfahren (100) gemäß einem der vorhergehenden Ansprüche, wobei das Verfahren (100) weiter umfasst,
- Zusammenführen der ersten Validität, der zweiten Validität und der Validität
bezogen auf die Anzahl, um eine Gesamt-Validität für den Datensatz zu bestimmen; und/oder
- Zusammenführen des Kriteriums für die Szenariovollständigkeit und des Kriteriums für die Szenarioklassenvollständigkeit, um eine Gesamt-Vollständigkeit für den Datensatz zu bestimmen.

13. Verfahren (100) gemäß einem der vorhergehenden Ansprüche, wobei das Verfahren (100) umfasst:
- Verwenden des Datensatzes (10) zur Validierung und/oder Verifikation einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion.

14. Verfahren (100) gemäß einem der vorhergehenden Ansprüche, wobei das Verfahren (100) umfasst:
- Verwenden des Datensatzes (10) zum Trainieren, Testen und/oder Validieren eines Maschinelles-Lernen-Modells, und
- Verwenden des Maschinelles-Lernen-Modells, um eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln.

15. Computersystem, dafür ausgelegt, das Verfahren (100) zur Vollständigkeitsschätzung von Daten gemäß einem der vorhergehenden Ansprüche 1 bis 14 auszuführen.

16. Computerprogramm, umfassend Befehle, die bei der Ausführung des Computerprogramms durch ein Computersystem dieses veranlassen, das Verfahren (100) zur Vollständigkeitsschätzung von Daten gemäß einem der vorhergehenden Ansprüche 1 bis 14 auszuführen.

17. Computerlesbares Medium oder Signal, das das Computerprogramm gemäß Anspruch 16 speichert und/oder enthält.
